# EUROPÄISCHE PATENTSCHRIFT

(11) **EP 3 978 877 B1**
(45) Veröffentlichungstag und Bekanntmachung des Hinweises auf die Patenterteilung: **08.11.2023**
(21) Anmeldenummer: 21196391.3
(22) Anmeldetag: 13.09.2021
(51) Int. Cl.: G01C 21/36, G02B 27/01

(54) **HORIZONTALE POSITIONSFESTLEGUNG FÜR DAS EINBLENDEN VIRTUELLER OBJEKTE BEI EINER HEAD-UP- DISPLAYEINRICHTUNG**
HORIZONTAL POSITION DEFINITION FOR THE INSERTION OF VIRTUAL OBJECTS IN A HEAD-UP DISPLAY DEVICE
DÉTERMINATION HORIZONTALE DE POSITION POUR L'AFFICHAGE DES OBJETS VIRTUELS DANS UN DISPOSITIF D'AFFICHAGE TÊTE HAUTE

(30) Priorität: 05.10.2020 DE 102020212520
(43) Veröffentlichungstag der Anmeldung: 06.04.2022
(73) Patentinhaber: Volkswagen Aktiengesellschaft, 38436 Wolfsburg (DE)
(72) Erfinder: Kunze, Alexander, 13585 Berlin (DE); Wuttke, Ulrich, 38126 Braunschweig (DE)

(56) Entgegenhaltungen:
- WO-A1-2005/053991
- DE-A1-102018 203 927

## Beschreibung

Die Erfindung betrifft ein Verfahren zum Betreiben einer Head-Up-Displayeinrichtung und eine solche Head-Up-Displayeinrichtung, wobei die Head-Up-Displayeinrichtung für ein Kraftfahrzeug vorgesehen ist. Bei dem Kraftfahrzeug (kurz: Fahrzeug) kann es sich insbesondere um einen Personenkraftwagen oder einen Lastkraftwagen handeln.

Head-Up-Displayeinrichtungen (kurz: Head-Up-Displays) zum Einblenden virtueller Objekte oder, mit anderen Worten, virtueller Inhalte in ein Sichtfeld eines Fahrers sind auf dem Gebiet der Kraftfahrzeuge bekannt. Aus Sicht des Fahrers überlagern die eingeblendeten virtuellen Objekte die Umgebung. Die Einblendung kann bekanntermaßen an der Innenseite einer Windschutzscheibe erfolgen, z.B. durch Projizieren der Objekte darauf. Auch das Vorsehen gesonderter Projektionsflächen und insbesondere transparenter Projektionsscheiben ist bekannt, auf die die Objekte projiziert werden. Technologischer Hintergrund zu allgemeinen Head-Up-Displays offenbaren z.B. die US 2019/0043392 A1 und FR 3 060 774 A1.

Aus der DE 10 2019 206 490 B3 ist ferner eine Head-Up-Displayeinrichtung mit Erweiterte-Realität-Funktion bekannt. Dabei werden grafische Elemente in Abhängigkeit einer Distanz des Kraftfahrzeugs zu einem Objekt in der Umgebung des Kraftfahrzeugs eingeblendet.

Um das Einblenden der Objekte möglichst zuverlässig zu ermöglichen und beispielsweise vorausschauend zu planen, ist es bekannt, virtuelle Umgebungsmodelle eines Kraftfahrzeugs zu betrachten bzw. zu erzeugen. Hierüber können einblendbare virtuelle Objekte bestimmten Umgebungsbereichen des Kraftfahrzeugs zugeordnet und dadurch in dem Umgebungsmodell positioniert. Sobald diese Objekte bzw. der Umgebungsbereich, denen sie zugeordnet sind, in ein Sichtfeld der Head-Up-Displayeinrichtung gelangen oder, mit anderen Worten, mit einem solchen Sichtfeld überlappen oder sich hiermit überlagern, können die Objekte eingeblendet werden. Aus Sicht des Fahrers werden die Objekte dann besonders positionsgerecht und/oder in Bezug auf die Umgebung ortsgebunden eingeblendet.

Insbesondere kann also vorgesehen sein, Objekte realen (und z.B. per Umgebungsmodell modellierten) Umgebungsbereichen zuzuordnen und diese auch entsprechend ortsbezogen und/oder perspektivisch und insbesondere dreidimensional angepasst darzustellen. Dies ist eine typische Funktion von Erweiterte-Realität-Head-Up-Displayeinrichtungen. Solche Objekte können auch als kontaktanaloge Objekte oder Anzeigeelemente bezeichnet werden. Es kann sich hierbei z.B. um Hervorhebungen (beispielsweise Umrahmungen) realer Umgebungsobjekte handeln, z.B. Verkehrsschilder. Ebenso kann es sich um Navigationsanweisungen handeln, z.B. Abbiegepfeile oder allgemeine Fahrtrichtungspfeile, die z.B. bestimmten Fahrbahnen oder Kreuzungsmittelpunkten zugeordnet sind. Auch Zielflaggen oder andere Ortsmarkierungen sind möglich.

Ebenso können aber allgemeine Hinweise eingeblendet werden, die nicht zwingend einem entsprechenden Objekt in der Umgebung zugeordnet sind, sondern z.B. lediglich einem bestimmten Umgebungsbereich, für den diese Hinweise Gültigkeit besitzen. Hierbei kann es sich z.B. um Warnhinweise, z.B. ein Glatteissymbol, oder um Hinweise betreffend eine zulässige Geschwindigkeit handeln. In einem Umgebungsmodell können derartige Hinweise bestimmten Umgebungsbereichen zugeordnet werden und wenn sich das Kraftfahrzeug darin befindet und/oder der Umgebungsbereich von dem Sichtfeld erfasst wird, kann eine entsprechende Einblendung erfolgen.

Es wurde erkannt, dass dieses Vorgehen derzeit aber noch nicht in gewünschter Weise gelingt. So können aus Sicht des Fahrers sprunghafte und/oder nicht intuitiv wirkende Einblendungen und insbesondere Positionsänderungen eingeblendeter Objekte auftreten, wenn das Fahrzeug seine Ausrichtung relativ zu einem einzublendenden Objekt bzw. einem Umgebungsbereich, dem das Objekt zugeordnet ist, ändert.

Kritisch ist ferner, wenn das Objekt bzw. der Umgebungsbereich sich zumindest kurzfristig nicht mit dem Sichtfeld überlagert, beispielsweise aufgrund einer Lenkbewegung des Fahrzeugs. Dann wird das Objekt nicht eingeblendet und verschwindet zumindest temporär aus dem Sichtbereich des Fahrers. Der Fahrer hat dann aber womöglich ein aktuelles Fahrmanöver noch nicht begonnen oder beendet, auf das sich dieses Objekt bezieht. Auch kann das Objekt bei einem Wiedereintritt des Umgebungsbereichs in das Sichtfeld unerwartet und/oder an einer unerwarteten Position wieder eingeblendet werden.

Aus der WO 2005/053991 A1 und der DE 10 2018 203 927 A1 sind gattungsgemäße Verfahren zum Betreiben einer Head-up-Displayeinrichtung bekannt.

Es besteht somit ein Bedarf dafür, das Einblenden von Objekten mit einer Head-Up-Displayeinrichtung zuverlässiger zu gestalten, insbesondere wenn die Objekte Umgebungsbereichen des Kraftfahrzeugs zugeordnet sind.

Diese Aufgabe wird durch ein Verfahren mit den Merkmalen des beigefügten Anspruchs 1 und eine Head-Up-Displayeinrichtung mit den Merkmalen des nebengeordneten Vorrichtungsanspruchs gelöst. Vorteilhafte Weiterbildungen sind in den abhängigen Ansprüchen angegeben.

Es wird allgemein vorgeschlagen, eine Positionsfestlegung und genauer gesagt horizontale Positionsfestlegung abhängig von der Relativausrichtung des Fahrzeugs zu einem virtuellen Bezugsmerkmal zu steuern. So werden typischerweise die einzublendenden Objekte Umgebungsbereichen zum Beispiel in einem Umfeld- oder Umgebungsmodell des Fahrzeugs zugeordnet und werden Einblendungen (insbesondere der Objekte selbst) in Abhängigkeit einer Relativausrichtung des Fahrzeugs zu dem Umgebungsbereich erzeugt.

Es hat sich jedoch gezeigt, dass damit die vorstehend erläuterten Probleme einhergehen können. Insbesondere kann es schwierig sein, im Fahrbetrieb und in Echtzeit diese Ausrichtung ausreichend schnell und zuverlässig zu bestimmen. Aus Sicht des Fahrers können dann verzögerte und daher wenig intuitive Positionsanpassungen der Einblendung erfolgen, wenn dieser eine Lenkbewegung relativ zu dem Umgebungsbereich ausführt. Auch wurde erkannt, dass in bestimmten Fahrsituationen eine zumindest initiale Positionierung und insbesondere horizontale Positionierung der Einblendung abhängig von der Orientierung zum Umgebungsbereich zu wenig intuitiven und insbesondere außermittigen initialen Einblendungen führen kann.

Erfindungsgemäß ist daher vorgesehen, ein anderweitiges virtuelles Bezugsmerkmal zu definieren, dass eine (insbesondere initial) intuitivere Einblendung und allgemein eine aus Sicht des Fahrers angemessene (insbesondere horizontale) Positionierung einer Einblendung ermöglicht. Als vorteilhaft hat sich hierbei das Verwenden eines virtuellen Bezugsmerkmals herausgestellt, dass abhängig von einer Fahrbahn und insbesondere deren Ausrichtung bzw. Verlaufsrichtung definiert ist.

Insbesondere wird Verfahren zum Betreiben einer Head-Up-Displayeinrichtung für ein Kraftfahrzeug, wobei Umgebungsbereichen des Kraftfahrzeugs virtuelle Objekte zuordenbar sind (oder im Rahmen des Verfahrens auch als eine gesonderte Maßnahme zugeordnet werden und/oder erfolgte Zuordnungen erhalten werden), und wobei das Verfahren aufweist:
- Erhalten eines virtuellen Bezugsmerkmals, dessen Ausrichtung abhängig von einer von dem Kraftfahrzeug genutzten oder nutzbaren Fahrbahn (und insbesondere deren Verlauf und/oder Richtung) definiert ist;
- Ermitteln einer Ausrichtung des Kraftfahrzeugs relativ zu dem virtuellen Bezugsmerkmal;
- Einblenden eines virtuellen Objekts, wenn der (diesem Objekt) zugeordnete Umgebungsbereich in einem Sichtfeld der Head-Up-Displayeinrichtung liegt, wobei eine horizontale Position des eingeblendeten Objekts im Sichtfeld abhängig von der Relativausrichtung zu dem virtuellen Bezugsmerkmal ist.

Das Verfahren kann auch das Erzeugen des virtuellen Bezugsmerkmals umfassen. Dies kann während des Fahrbetriebs und insbesondere in Echtzeit erfolgen, beispielsweise wenn sich das Fahrzeug einem Umgebungsbereich mit zugeordneten virtuellen Objekten nähert. Alternativ können entsprechenden Umgebungsbereichen auch vorab erzeugte virtuelle Bezugsmerkmale zugeordnet sein und diese können beispielsweise per Datenbankabfrage und/oder von einem externen Server erhalten werden.

Allgemein kann das Verfahren computergesteuert ausgeführt werden, beispielsweise von einer Steuereinrichtung einer hierin offenbarten Head-Up-Displayeinrichtung. Die Steuereinrichtung kann wenigstens eine Prozessoreinrichtung und/oder wenigstens eine Speichereinrichtung umfassen. Auf der Speichereinrichtung können Programmanweisungen hinterlegt sein, die bei Ausführen durch die Prozessoreinrichtung die Steuereinrichtung dazu veranlassen, jegliche hierin erwähnten Schritte oder Maßnahmen auszuführen. Beispielsweise kann die Steuereinrichtung nach Eingeben einer gewünschten Fahrroute per Datenbankabfrage oder von einem externen Server eine Information bezüglich einer Zuordnung wenigstens eines virtuellen Objekts zu einem Umgebungsbereich erhalten. Alternativ kann sie diese Zuordnung auch selbst vornehmen. Anschließend kann die Steuereinrichtung die Lage eines Sichtfeldes der Head-Up-Displayeinrichtung z.B. in dem (globalen) Koordinatensystem eines Umgebungsmodells bevorzugt fortlaufend ermitteln (hierin auch als Umfeldmodell bezeichnet). Daraufhin kann das zumindest teilweise Überdecken von Sichtfeld und Umgebungsbereich ermittelt werden und kann die Steuereinrichtung die Head-Up-Displayeinrichtung (insbesondere bilderzeugende Einheiten hiervon) in an sich bekannter Weise zum Erzeugen gewünschter virtueller Einblendungen ansteuern.

Weiter wird dann, wenn sich der Umgebungsbereich wieder außerhalb des Sichtfelds befindet, das Objekt zumindest vorübergehend an einem Randbereich des Sichtfeldes eingeblendet und/oder positioniert. Zusätzlich kann dann, wenn die Relativausrichtung ein definiertes (erstes) Ausmaß annimmt, das Objekt zumindest vorrübergehend an einem vorbestimmten Randbereich des Sichtfeldes eingeblendet werden. Dieses Ausmaß kann gleichbedeutend mit dem Austreten des Umgebungsbereiches aus dem Sichtfeld sein und z.B. entsprechend berechnet werden.

Das Einblenden am Randbereich kann zumindest bis zum Überschreiten eines definierten (zweiten) Ausmaßes der Relativausrichtung erfolgen, zum Beispiel bis ein zulässiger Winkel zu dem Bezugsmerkmal überschritten ist. Beispielhaft beträgt dieser Winkel 180° oder mehr und/oder weniger als 0°. Gelangt der Umgebungsbereich wieder in das Sichtfeld (bzw. nimmt die Relativausrichtung wieder ein entsprechendes Ausmaß an), kann bevorzugt wiederum eine Variation der horizontalen Position je nach Relativausrichtung erfolgen.

An dem (allgemein bevorzugt seitlichen) Randbereich wird das Objekt bevorzugt in horizontal statischer Position eingeblendet, dort also horizontal stillstehend gehalten. Es kann sich dabei um den Randbereich handeln, der am nächsten zu dem Umgebungsbereich positioniert ist und/oder über den der Umgebungsbereich aus dem Sichtfeld ausgetreten ist. Das Objekt kann infolge einer sich ändernden Relativausrichtung zum Bezugsmerkmal sukzessive zu dem Randbereich bewegt werden und bei Austritt des Umgebungsbereiches aus dem Sichtfeld dort dann zumindest temporär verbleiben, bspw. solange der Umgebungsbereich nicht wieder mit dem Sichtfeld überlappt.

Auf diese Weise kann auch bei lediglich vorrübergehenden, aber auch dauerhaften und ggf. nur geringfügigen Austritten des Umgebungsbereichs aus dem Sichtfeld ein für den Fahrer relevantes Objekt (z.B. eine Navigationsanweisung) nach wie vor eingeblendet werden. Dies erhöht die Wahrscheinlichkeit, dass der Fahrer dieses Objekt zutreffend wahrnimmt. Gleichzeitig wird aber eine für den Fahrer intuitiv nachvollziehbare und wenig irritierende Möglichkeit geschaffen, mit Austritten eines dem Objekt zugeordneten Umgebungsbereiches aus dem Sichtfeld umzugehen: Bei Überlappung mit dem Sichtfeld folgt die Einblendung bevorzugt sich ändernden Relativbewegungen bzw. hierfür ursächlichen Lenkbewegungen. Bei Austritten aus dem Sichtfeld wird das Objekt an einem (insbesondere seitlichen) Randbereich gehalten (bevorzugt dem, der am nächsten zu dem Umgebungsbereich positioniert ist). Die horizontale Position des Objekts wird vorzugsweise nicht mehr variiert, bis ein Wiedereintritt des Umgebungsbereichs in das Sichtfeld oder das Überschreiten vorstehender Winkelgrenzen der Relativausrichtung registriert wird.

Zusammengefasst ist vorgesehen, dass das Objekt auch dann an dem Randbereich eingeblendet wird, wenn der Umgebungsbereich, dem das Objekt zugeordnet ist, außerhalb des Sichtfeldes liegt. Dies unterscheidet sich von bisherigen Ansätzen, bei denen nur dann Objekte eingeblendet werden, wenn deren zugeordneter Umgebungsbereich in dem Sichtfeld liegt.

Wie nachstehend noch erläutert, sieht eine bevorzugte Ausführungsform vor, dass das virtuelle Bezugsmerkmal eine Linie oder Fläche ist, die insbesondere orthogonal zu einer betrachteten Fahrbahn und insbesondere Fahrbahnrichtung verläuft. Als Relativausrichtung kann ein Winkel zwischen dem Kraftfahrzeug (insbesondere von zwischen dessen Längsachse und/oder dessen Fahrtrichtung) und dem Bezugsmerkmal betrachtet werden. Für die Relativausrichtung und insbesondere einen solchen Winkel können vorab Wertebereiche, Funktionen oder allgemein eine Abhängigkeit zur horizontalen Position einer erzeugten Objekteinblendung festgelegt werden. Fährt der Fahrer beispielsweise gerade auf das Bezugsmerkmal zu, kann die Relativausrichtung und insbesondere der Winkel zum Beispiel 90° betragen. Dann kann die Einblendung horizontal mittig im Sichtfeld erfolgen. Wird das Fahrzeug relativ zu dem Bezugsmerkmal ausgelenkt, kann die horizontale Position entsprechend angepasst werden.

Vorteilhaft ist, dass dies aus Sicht des Fahrers intuitiver ist, als wenn die Einblendung an einem Kreuzungsmittelpunkt erfolgt, zu der das Kraftfahrzeug typischerweise bei der Anfahrt der Kreuzung versetzt sein wird. Üblicherweise wird dieser Kreuzungsmittelpunkt jedoch als Umgebungsbereich gewählt, dem beispielsweise eine Navigationsanweisung (insbesondere ein Abbiegepfeil) als virtuelles Objekt zugeordnet ist. Mit der vorliegenden Lösung, bei der die Positionsfestlegung einer Einblendung bevorzugt ausschließlich in Abhängigkeit einer Relativausrichtung zu dem Bezugsmerkmal erfolgt und/oder bevorzugt unabhängig von der Ausrichtung zu dem Umgebungsbereich, kann die Einblendung intuitiver erfolgen.

Das Verfahren kann auch den gesonderten Schritt umfassen, zu ermitteln, dass ein Umgebungsbereich sich in dem Sichtfeld der Head-Up-Displayeinrichtung (hierin auch verkürzt: HUD) befindet oder zeitnah befinden wird. Wenn dies der Fall ist, kann spätestens dann das virtuelle Bezugsmerkmal definiert und/oder erhalten werden und kann die Relativausrichtung hierzu bestimmt werden. Darauf basierend kann die Einblendung des virtuellen Objekts im Sichtfeld erzeugt und/oder horizontal positioniert werden.

Das Zuordnen des virtuellen Objekts zu dem Umgebungsbereich kann virtuell stattfinden, beispielsweise per entsprechender Festlegung in einer Datenbank und/oder Assoziieren oder Zuordnen von Umgebungskoordinaten des Umgebungsbereichs zu dem virtuellen Objekt. Insbesondere kann das virtuelle Objekt virtuell in oder an dem Umgebungsbereich positioniert werden, beispielsweise in einem Umgebungsmodell. Dies kann gleichbedeutend damit sein, dass dem Objekt entsprechend Koordinaten des Umgebungsbereichs in dem Umgebungsmodell bzw. dessen Koordinatensystem zugeordnet werden. Anders ausgedrückt kann also das Objekt durch entsprechende Zuordnung eindeutig in dem Umgebungsmodell verortet und/oder positioniert werden. Auch das virtuelle Bezugsmerkmal kann mittels jeglicher der oben genannten Varianten in einem Umgebungsmodell definiert sein und/oder positioniert werden.

Der Umgebungsbereich kann ebenfalls rein virtuell sein. Er kann also einem Bereich in dem Umfeldmodell entsprechen und zum Beispiel eine entsprechende Punkte- oder Koordinatenmenge umfassen. Er kann einem realen Umgebungsbereich eindeutig zuordenbar sein und/oder diesem entsprechen.

In an sich bekannter Weise kann auch eine Position des Kraftfahrzeugs in dem Umgebungsmodell ermittelt werden, beispielsweise anhand von Ortungssystemen, wie z.B. einem GPS-basierten Ortungssystem. Es ist ebenso bekannt, die Ausrichtung eines Sichtfelds einer Head-Up-Displayeinrichtung z.B. in einem Kraftfahrzeugkoordinatensystem zu ermitteln. Dabei kann es sich bei dem Sichtfeld allgemein um ein Feld, eine Fläche oder einen Bereich handeln, in der mit der Head-Up-Displayeinrichtung Objekte einblendbar sind und insbesondere dort hinein projizierbar sind. Die Position des Sichtfelds innerhalb des Kraftfahrzeugs kann beispielsweise anhand der Einbauposition der Head-Up-Displayeinrichtung in dem Kraftfahrzeug bestimmt werden und/oder auf Basis von Einstellungen insbesondere optischer Komponenten der Head-Up-Displayeinrichtung, sofern diese z.B. zum Variieren einer Eyebox durch den Fahrer variabel sind.

Aus einer bekannten Relativanordnung des Kraftfahrzeugs (und insbesondere von dessen Koordinatensystem) zur Umgebung (und insbesondere einem globalen Koordinatensystem eines Umgebungsmodells) kann dann auch die Lage des Sichtfelds innerhalb des Umgebungsmodells bestimmt werden und insbesondere, mit welchen Umgebungsbereichen sich dieses überlappt und/oder welche Umgebungsbereiche sich aktuell in dem Sichtfeld befinden (d.h. mit diesem überlappen, überdecken und/oder von dem Sichtfeld erfasst werden). Hierfür können z.B. auch aktuelle Fahrzeugparameter herangezogen werden, z.B. Federungseinstellungen, die eine Höhenposition der Fahrerkabine und/oder der Head-Up-Displayeinrichtung relativ zur Fahrbahn beeinflussen.

Auf diese Weise kann also erzielt werden, dass eine Lage des Umgebungsbereichs und/oder diesem zugeordneter Objekte im Umfeldmodell bekannt ist, wie auch die Lage eines Sichtfeldes und/oder der vom Sichtfeld aktuell erfassten Umgebungsbereiche. Dies ermöglicht das Überprüfen dahingehend, ob ein aktuell einzublendendes Objekts bzw. der diesem Objekt zugeordnete Umgebungsbereich sich in dem Sichtfeld befindet oder nicht.

In analoger Weise kann in und/oder mittels des Umgebungsmodells auch die Relativausrichtung von Fahrzeug und virtuellen Bezugsmerkmal ermittelt werden. Hierfür kann auf die Koordinaten des virtuellen Bezugsmerkmals und/oder des Fahrzeugs sowie gegebenenfalls deren jeweiliger bekannter Abmessungen und/oder Orientierungen zurückgegriffen werden.

Als ein allgemeiner Aspekt kann vorgesehen sein, dass für ein initiales Einblenden des virtuellen Objekts zunächst festgestellt wird, dass sich der Umgebungsbereich zumindest teilweise in dem Sichtfeld befindet. Ist diese Bedingung erfüllt, können daraufhin zumindest horizontale Positionsfestlegungen der Einblendung in Abhängigkeit von der Relativausrichtung zu dem Bezugsmerkmal erfolgen. Dies kann zumindest solange aufrechterhalten werden, bis eine vorbestimmte Abbruchbedingung erfüllt ist (zum Beispiel bis die Relativausrichtung und insbesondere ein diese definierender Winkel eine zulässige Grenze überschreitet).

Allgemein kann eine vertikale Position der Einblendung zum Beispiel abhängig von der Relativausrichtung zu dem Umgebungsbereich variiert werden. Sie kann also unabhängig von Anpassungen der horizontalen Position ermittelt und festgelegt werden und insbesondere unabhängig von der Ausrichtung zu dem Bezugsmerkmal. Gemäß einer Variante ist die vertikale Position konstant und das Objekt wird beispielsweise mittig entlang einer Vertikalachse des Sichtfeldes eingeblendet. Auch eine Größe der Einblendung kann variabel sein, zum Beispiel abhängig von einem Abstand zu dem Umgebungsbereich und/oder Bezugsmerkmal.

Gemäß einer bevorzugten Ausführungsform umfasst das Bezugsmerkmal eine virtuelle Linie oder eine virtuelle Fläche. Diese können jeweils die Fahrbahn quer überspannen bzw. die Fahrbahn kann orthogonal hierzu verlaufen. Beispielsweise kann die Fahrbahn allgemein in einer horizontalen Ebene verlaufen und das virtuelle Bezugsmerkmal (insbesondere als Linie oder virtuelle Fläche) kann in einer vertikalen Ebene verlaufen. Diese beiden Ebenen können rechtwinklig zueinander orientiert sein.

Entsprechend sieht eine Weiterbildung vor, dass das Bezugsmerkmal in einem Winkel zu der Fahrbahn verläuft. Auch hier versteht es sich, dass die Ausrichtung des Bezugsmerkmal zur Fahrbahn in einem Umfeldmodell definiert sein kann und/oder sich auf eine entsprechende modellhafte Repräsentation von Fahrbahn und Bezugsmerkmal beziehen kann.

Gemäß einem weiteren bevorzugten Aspekt ist (oder wird) die Ausrichtung des Bezugsmerkmals basierend auf Kartendaten definiert. Diese können eine Lage (insbesondere eine Richtung oder ein Verlauf) der Fahrbahn beschreiben. Insbesondere kann darauf basierend bestimmt werden, wie das Bezugsmerkmal in dem Umfeldmodell zu orientieren und/oder auszurichten ist (beispielsweise quer zu der gemäß den Kartendaten ausgerichteten Fahrbahn).

Eine Position des Bezugsmerkmals entlang der Fahrbahn kann zum Beispiel dadurch festgelegt werden, dass das Bezugsmerkmal eine vorbestimmte Relativposition zu dem Umgebungsbereich einnehmen soll. Beispielsweise kann dieses den Umgebungsbereich umfassen oder schneiden, insbesondere wenn es sich um eine Zielposition einen Kreuzungsmittelpunkt, einen Manöverpunkt oder dergleichen handelt. Das Bezugsmerkmal kann also insbesondere eine virtuelle Fläche umfassen oder sein, die quer auf der Fahrbahn steht und den Umgebungsbereich umfasst und/oder sich mit diesem überlappt oder diesen schneidet.

Gemäß einer bevorzugten Variante ist das Bezugsmerkmal verschieden von dem Umgebungsbereich, dem das Objekt zugeordnet ist. Wie geschildert, kann es sich jedoch hiermit überlappen und/oder diesen schneiden. Beispielsweise können das Bezugsmerkmal und der Umgebungsbereich unterschiedliche virtuelle Bereiche in einem Umgebungsmodell umfassen und/oder unterschiedliche Koordinatenmengen.

Dabei ist vorgesehen, dass die horizontale Position des eingeblendeten Objekts nach Maßgabe von Veränderungen der Relativausrichtung variierbar ist. Insbesondere kann fortlaufend die Relativausrichtung erfasst werden und kann bei Veränderungen die horizontale Position geeignet und bevorzugt in Echtzeit angepasst werden. Dies erfolgt vorzugweise kontinuierlich und ohne Sprünge. Aus Sicht des Fahrers kann dies dazu führen, dass das eingeblendete Objekt Fahrzeug- und insbesondere Lenkbewegungen horizontal folgt, was einer intuitiv nachvollziehbaren Darstellung entsprechen kann.

In diesem Zusammenhang hat es sich als besonders intuitiv nachvollziehbar herausgestellt, wenn die horizontale Position gegenläufig zu einer Änderung der Relativausrichtung und/oder gegenläufig zu einer hierfür ursächlichen Lenkbewegung variiert wird. Diese Weiterbildung kann insbesondere umfassen, dass bei einem nach links Lenken (und entsprechender Änderung der Relativausrichtung zu dem Bezugsmerkmal) sich die horizontale Position nach rechts verlagert und bei einem nach rechts Lenken in umgekehrter Weise nach links verlagert.

Wie erwähnt, kann als eine die Relativausrichtung beschreibende (oder auch definierende) Größe ein Winkel zwischen dem Kraftfahrzeug und dem Bezugsmerkmal ermittelt werden. Hierbei kann es sich um den Winkel zwischen der Fahrtrichtung und/oder einer (z.B. virtuelle verlängerten) Fahrzeuglängsachse und dem Bezugsmerkmal handeln, insbesondere einem Schnittwinkel hierzwischen. Dieser Winkel ist schnell und zuverlässig ermittelbar und ermöglich ein positionsgerechtes Einblenden virtueller Objekte.

Allgemein kann dann, wenn der Winkel 90° beträgt, die horizontale Position mittig sein, d.h. kann dann eine Objekteinblendung in der horizontalen Mitte des Sichtfeldes erfolgen. Hiervon ausgehend zunehmende Winkel können mit einer Verschiebung in eine erste Richtung, abnehmende Winkel mit einer Verschiebung in einer entgegensetzten zweiten Richtung einhergehen. Ab einem definierten Winkelbetrag von z.B. 180° oder negativen Winkeln können keine Einblendungen mehr erfolgen.

Die Erfindung betrifft auch eine Head-Up-Displayeinrichtung für ein Kraftfahrzeug, die dazu eingerichtet ist, ein Verfahren gemäß jeglichem der vorangehenden Ansprüche auszuführen.

Insbesondere kann die Head-Up-Displayeinrichtung dazu eingerichtet sein, wenigstens ein virtuelles Bezugsmerkmal zu erhalten (oder zu erzeugen und dadurch zu erhalten), dessen Ausrichtung abhängig von einer von dem Kraftfahrzeug genutzten oder nutzbaren Fahrbahn definiert ist; eine Ausrichtung des Kraftfahrzeugs relativ zu dem virtuellen Bezugsmerkmal zu ermitteln; ein virtuelles Objekt einzublenden, wenn der zugeordnete Umgebungsbereich (zumindest teilweise) in einem Sichtfeld der Head-Up-Displayeinrichtung liegt, wobei die Head-Up-Displayeinrichtung ferner dazu eingerichtet ist, eine horizontale Position des eingeblendeten Objekts im Sichtfeld abhängig von der Relativausrichtung zu dem virtuellen Bezugsmerkmal festzulegen.

Die Head-Up-Displayeinrichtung kann jegliche der vorstehend erläuterten Varianten oder Weiterbildungen umfassen, beispielsweise durch Umfassen einer vorstehend geschilderten Steuer- bzw. Prozessor- und/oder Speichereinrichtung. Sämtliche der vorstehenden Ausführung zu und Weiterbildungen von Verfahrensmerkmalen können auf die gleichlautenden Merkmale der Head-Up-Displayeinrichtung ebenso zutreffen bzw. bei dieser vorgesehen sein. Ausführungsbeispiele der Erfindung werden im Folgenden anhand der nachstehenden schematischen Figuren erläutert.
- Fig. 1: zeigt ein Kraftfahrzeug umfassend eine Head-Up-Displayeinrichtung gemäß einem Ausführungsbeispiel der Erfindung, mit der ein Verfahren gemäß einem Ausführungsbeispiel der Erfindung ausgeführt wird, während sich das Kraftfahrzeug einer Kreuzung nähert.
- Fig. 2: zeigt eine Ansicht eines Umfeldmodells des Kraftfahrzeugs aus Fig. 1.
- Fig. 3: zeigt ein Ablaufschema des gemäß Fig. 1 und Fig. 2 ausgeführten Verfahrens.
- Fig. 4A-F: zeigen Ansichten eines virtuellen Objekts in einem Sichtfeld in verschiedenen Betriebssituationen, wie sie mit den vorangehenden Ausführungsbeispielen erzeugbar sind.

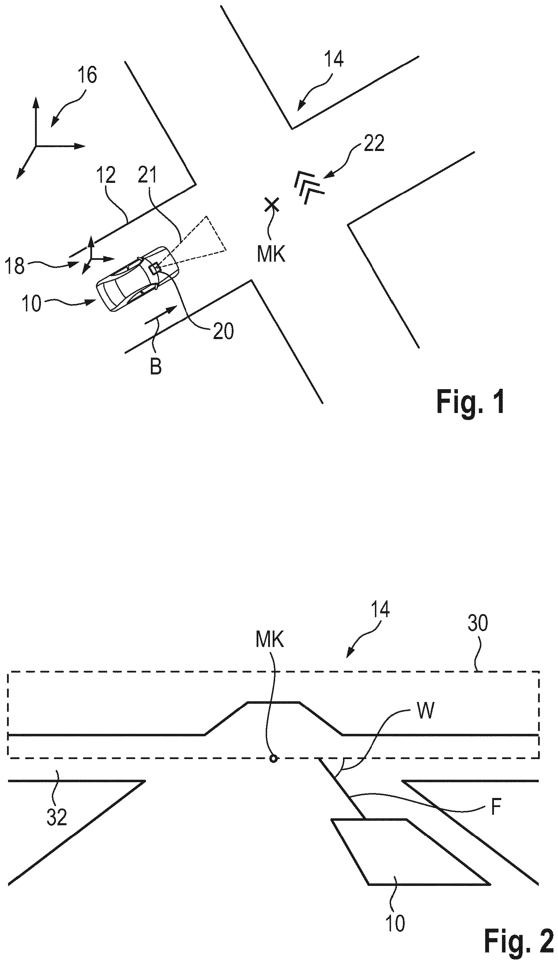

In Fig. 1 ist eine Fahrsituation eines Fahrzeugs 10 gezeigt, wenn dieses sich gemäß dem Bewegungspfeil B und entlang einer Fahrbahn 12 einer Kreuzung 14 annähert. Die Darstellung kann einer realen Fahrsituation entsprechen. Sie kann allerdings auch in einem Umfeldmodell entsprechend modelliert sein, wie nachstehend noch anhand von Fig. 2 erläutert. Bevorzugt ist das Umfeldmodell jedoch abstrakt und definiert lediglich ausgewählte Eigenschaften der Umgebung in dem angedeuteten globalen (Umfeld-) Koordinatensystem 16.

In diesem globalen Koordinatensystem 16 kann insbesondere eine Position des Fahrzeugs 10 und bevorzugt eines fahrzeuggebundenen (Fahrzeug-)Koordinatensystems 18 bestimmt werden. In dem Fahrzeug-Koordinatensystem 18 definierte Koordinaten können in bekannter Weise in globale Koordinaten in dem globalen Koordinatensystem 16 transformiert werden. Ein Beispiel von in dem Fahrzeug-Koordinatensystem 18 festgelegte Koordinaten sind die Koordinaten einer Head-Up-Displayeinrichtung 20 (im Folgenden auch HUD 20). Ebenso können in dem Fahrzeug-Koordinatensystem 18 Koordinaten eines Sichtfelds 21 bestimmt werden. Wie einleitend geschildert, kann dieses optional durch Verstellen der HUD 20 variabel positionierbar sein. Insbesondere kann hierdurch eine aus Sicht des Fahrzeugs 10 bzw. eines darin befindlichen Fahrzeugfahrers vertikale und horizontale Ausrichtung des Sichtfeldes 21 definiert werden. Die Begriffe vertikal und horizontal können sich dabei auf entsprechende vertikale und horizontale Raumrichtungen beziehen, wobei die Vertikalachse einer Achse entsprechen kann, entlang derer die Gravitationskraft wirkt. Die Horizontalachse kann orthogonal zu der Vertikalachse verlaufen. Eine optionale Tiefenachse kann entlang oder parallel zu einer Fahrzeuglängsachse verlaufen.

In dem globalen Koordinatensystem 16 ist beispielhaft ein Mittelpunkt MK der Kreuzung 14 definiert und sind genauer gesagt dessen Koordinaten definiert. Diesem Kreuzungsmittelpunkt MK wird vorliegend eine visuelle bzw. grafische Navigationsanweisung 22 zugeordnet (lediglich beispielhaft dargestellt als drei aufeinanderfolgende Pfeilspitzen, siehe auch nachstehende weitere Figuren). Diese Zuordnung bedeutet, dass die Position der Navigationsanweisung 22, die ein Beispiel eines einzublenden virtuellen Objektes ist, in dem globalen Koordinatensystem 16 festgelegt ist.

Statt dem Kreuzungsmittelpunkt MK könnte auch ein hierzu versetzter Punkt als ein Manöverpunkt definiert sein, an dem die Navigationsanweisung 22 einzublenden ist.

Mit bisherigen Ansätzen sollen Einblendungen dieser Navigationsanweisung 22 aus Sicht des Fahrers und gemäß dem Funktionsprinzip bekannter Augmented-Reality-HUDs derart erfolgen, dass sie an dem Kreuzungsmittelpunkt MK liegen bzw. optisch mit diesem zusammenfallen. Wie nachstehend erläutert, gilt dies vorliegend aber nur für eine in Fahrtrichtung vorliegende Tiefendimension. Eine quer hierzu (und parallel zur Fahrbahn 12 verlaufende) horizontale Position der Einblendung wird in der nachstehend geschilderten Weise anderweitig festgelegt.

In Fig. 2 ist in einer gedrehten Ansicht die Situation aus Fig. 1 gezeigt, wie sie in einem Umfeldmodell modellierbar ist. Das Fahrzeug 10 ist in diesem Fall nur schematisch umrissen. Hiervon ausgehend erstreckt sich ein Fahrtrichtungsvektor F (entspricht der Bewegungsrichtung B in Fig. 1). Dieser kann zum Beispiel einer Ausrichtung der Fahrzeuglängsachse entsprechen oder durch diese definiert sein, wobei die Fahrzeuglängsachse nach Maßgabe eines eingestellten Lenkwinkels des Fahrzeugs 10 räumlich ausgerichtet ist. Das Fahrzeug 10 fährt auf der rechten Fahrbahnseite geradeaus, sodass auch der Fahrtrichtungsvektor F entlang der Fahrbahnrichtung verläuft.

Ferner erkennt man ein virtuelles Bezugsmerkmal 30. Hierbei handelt es sich um eine gestrichelt umrissene Fläche oder auch um eine virtuelle Wand. Diese ist derart definiert, dass sie orthogonal zur Fahrbahn 12 verläuft, auf der sich das Fahrzeug 10 befindet. Hierfür kann eine Ausrichtung der Fahrbahn 12 im globalen Koordinatensystem 16 aus Figur 1 ermittelt werden, zum Beispiel anhand von Kartendaten. Die virtuelle Wand 30 wird dann derart definiert, dass sie orthogonal zur Oberfläche der Fahrbahn 12 verläuft bzw. dass die Fahrbahn 12 senkrecht auf der virtuellen Wand 30 steht.

Weiter ist die virtuelle Wand 30 bevorzugt derart definiert, dass sie sich durch den Kreuzungsmittelpunkt MK als den hier betrachteten Umgebungsbereich erstreckt. Hierdurch wird insbesondere eine Position der virtuellen Wand 30 entlang der Fahrbahn 12 festgelegt. Da es sich vorliegend um eine Kreuzung mit sich orthogonal kreuzenden Fahrbahnen 12, 32 handelt, folgt die virtuelle Wand 30 einer orthogonal zu der Fahrbahn 12, auf der sich das Fahrzeug 10 befindet, verlaufenden weiteren Fahrbahn 32.

Zwischen dem Fahrtrichtungsvektor F (oder einem anderen beliebigen Merkmal, mit dem eine Lage und/oder Ausrichtung des Fahrzeugs 10 definiert werden kann) und der virtuellen Wand 30 wird eine Relativausrichtung ermittelt. Diese wird bevorzugt durch den eingetragenen Winkel W beschrieben, der der Schnittwinkel zwischen dem Fahrtrichtungsvektor F und der virtuellen Wand 30 ist. Der Winkel W wird im gezeigten Beispiel folglich in der Ebene der Fahrbahn 12 oder in einer hierzu parallelen Ebene gemessen.

Vorliegend kann anhand der jeweils im Umfeldmodell und/oder im Umgebungskoordinatensystem 16 definierten Ausrichtungen festgestellt werden, ob der Umgebungsbereich bzw. Kreuzungsmittelpunkt MK im Sichtfeld 21 der HUD 20 liegt (siehe Figur 1). Wenn dies der Fall ist, kann die Ausrichtung des Fahrzeugs 10 relativ zu dem virtuellen Bezugsmerkmal in Form der Wand 30 bestimmt werden und kann darauf basierend ein Einblenden des dem Kreuzungsmittelpunkt MK zugeordneten Objekts (Navigationsanweisung 22) im Sichtfeld 21 erfolgen. Zumindest die horizontale Position des eingeblendeten Objekts im Sichtfeld 21 wird anhand der ermittelten Relativausrichtung zur Wand 30 festgelegt und insbesondere variiert.

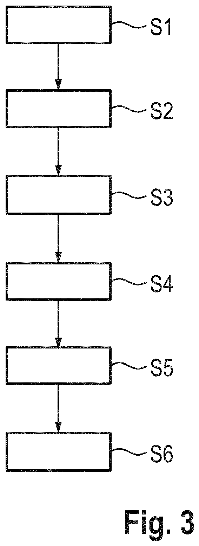

Anhand von Fig. 3 wird dieser Vorgang noch einmal gesondert geschildert. In einem Schritt S1 werden Informationen betreffend eine Zuordnung des einzublendenden Objektes in Form der Navigationsanweisung 22 zu einem Umgebungsbereich (vorliegend dem Kreuzungsmittelpunkt MK) erhalten. Alternativ kann im Schritt S1 diese Zuordnung aktiv durchgeführt werden, beispielsweise durch die HUD 20 bzw. eine nicht gesondert abgebildete Steuereinrichtung hiervon. Die Zuordnung umfasst, dass die Koordinaten des Navigationshinweises 22 in dem globalen Koordinatensystem 16 definiert sind bzw. erhalten werden.

In einem Schritt S2 wird bevorzugt fortlaufend und/oder wiederholt eine Lage des Sichtfeldes 21 in dem globalen Koordinatensystem 16 bestimmt. In einem Schritt S3 wird dann bevorzugt ebenso wiederholt und/oder zyklisch geprüft, ob das Sichtfeld 21 den Umgebungsbereich MK und insbesondere das dort positionierte Objekt bzw. den Navigationshinweis 22 zumindest teilweise abbildet und/oder enthält. Alternativ kann auch ein vollständiges Enthalten gefordert sein bzw. geprüft werden. Das Überprüfen kann durch Abgleichen der Koordinaten des Sichtfeldes 21 sowie des Umgebungsbereiches MK und/oder des dort positionierten Navigationshinweises 22 in dem globalen Koordinatensystem 16 erfolgen. Dabei ist zu berücksichtigen, dass sowohl das Sichtfeld 21 als auch der Navigationshinweis 22 zweidimensional sein können und entsprechend eine zweidimensionale Menge oder zweidimensional verteilte Koordinaten in dem globalen Koordinatensystem 16 umfassen bzw. solchen zugeordnet sein können. Sind beispielsweise die Koordinaten des Navigationshinweises 22 und/oder des Umgebungsbereiches MK vollständig in denen des Sichtfelds 21 enthalten, ist der Navigationshinweis 22 vollständig in dem Sichtfeld 21 durch eine entsprechende Einblendung abbildbar.

Wurde in dem Schritt S3 festgestellt, dass der Umgebungsbereich MK in dem Sichtfeld 21 enthalten ist, wird in einem Schritt S4 ein virtuelles Bezugsmerkmal 30 erhalten. Genauer gesagt wird dieses (bevorzugt in Echtzeit) anhand von Kartendaten und einer hierdurch definierten Ausrichtung der aktuell befahrenen Fahrbahn 12 in dem globalen Koordinatensystem 16 definiert. Alternativ kann auch ein vorab definiertes und zum Beispiel als Teil der Kartendaten hinterlegtes Bezugsmerkmal 30 ausgelesen werden und/oder kann dieses vor dem Schritt S3 z.B. bei einem Annähern an die Kreuzung 14 erhalten oder erzeugt werden.

In einem Schritt S5 wird die Relativausrichtung des Fahrzeugs 10 zu dem Bezugsmerkmal 30 und im gezeigten Beispiel der Winkel W aus Figur 2 bestimmt.

In einem Schritt S6 erzeugt die HUD 20 eine Einblendung des Navigationshinweises 22, wobei eine horizontale Position dieser Einblendung in Abhängigkeit der Relativausrichtung aus Schritt S5 festgelegt ist.

Es versteht sich, dass die Relativausrichtung gemäß Schritt S5 fortlaufend ermittelbar ist und die Position gemäß Schritt S6 entsprechend auch fortlaufend aktualisierbar ist. Variiert die Relativausrichtung zum Beispiel infolge eines Lenkmanövers, kann die horizontale Position in Schritt S6 aus Sicht des Fahrers derart kontinuierlich angepasst werden, dass der eingeblendete Navigationshinweis 22 eine kontinuierliche Bewegung innerhalb des Sichtfelds 21 ausführt.

In 4A-F sind beispielhafte Einblendungen gezeigt, wie sie gemäß Schritt S6 in Abhängigkeit der ermittelten Relativausrichtung erzeugbar sind.

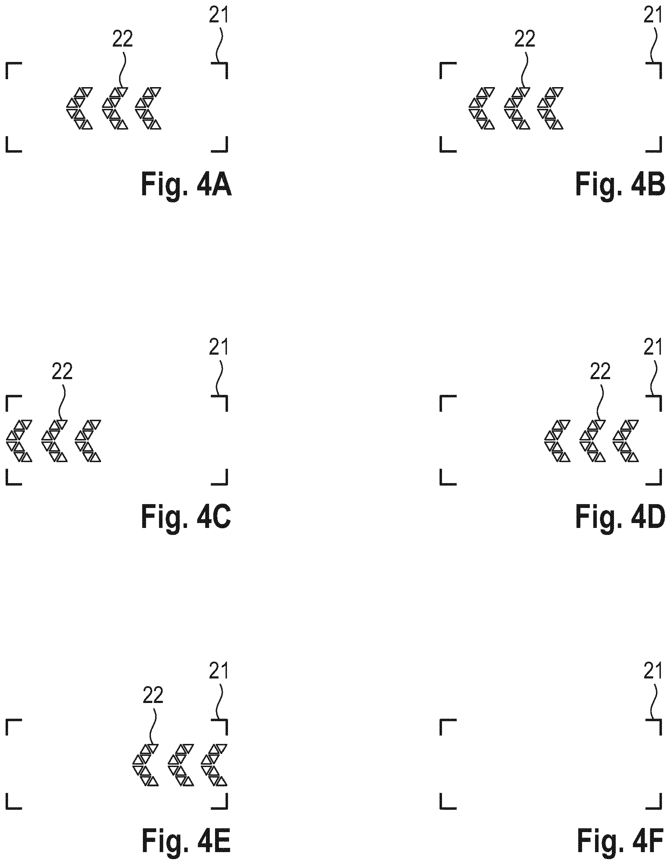

In Figur 4A beträgt der Winkel W 90°. Das Fahrzeug 10 fährt also geradeaus auf die Kreuzung 14 zu. Der Navigationshinweis 22 wird in dem Sichtfeld 21 horizontal mittig positioniert und angezeigt. Man beachte, dass dies erfolgt, obwohl der Umgebungsbereich bzw. Kreuzungsmittelpunkt MK ausweislich Figur 2 relativ zu dem Fahrzeug 10 nach links versetzt ist. Dieser Relativversatz spiegelt sich jedoch nicht in der Einblendung wieder, da die horizontale Position des eingeblendeten Navigationshinweises 22 stattdessen nach Maßgabe der Relativausrichtung (dem Winkel W) zu dem Bezugsmerkmal 30 festgelegt wird.

Im Fall von Figur 4B beträgt der Winkel mehr als 90°, d. h. das Fahrzeug lenkt nach rechts gegenüber dem Zustand aus Figur 2. Der Navigationshinweis 22 wird daraufhin gegenüber der mittigen Anzeige aus Figur 4A horizontal nach links verlagert, bewegt sich also gegenläufig zur Änderung der Relativausrichtung. Der gegenteilige Fall (Lenken nach links, horizontale Verlagerung des Navigationshinweises 22 nach rechts) ist in Figur 4D gezeigt.

Hierdurch entstehen aus Sicht des Fahrers jeweils intuitive Einblendungen und Positionsänderungen, da der Navigationshinweis 22 dann das eigentlich gewünschte Fahrmanöver unterstreicht und eine Orientierung relativ zur Umgebung gemäß dem Zustand aus Figur 4A zumindest teilweise aufrechterhalten wird. Anders ausgedrückt kann somit der visuelle Eindruck vermittelt werden, dass die mittige Ausrichtung gemäß Figur 4A einem Soll-Zustand entspricht und können Verlagerungen des Sichtfeldes 21 relativ zu diesem Soll-Zustand durch die gegenläufige horizontale Verlagerung des Navigationshinweises 22 angezeigt werden.

In den Figuren 4C und 4D ist der Navigationshinweis 22 an einem linken bzw. rechten seitlichen Randbereich des Sichtfeldes 21 positioniert. Dieser Fall tritt dann auf, wenn der Winkel W ein Maß überschreitet, der einem Zustand entspricht, in dem der Umgebungsbereich MK außerhalb des Sichtfeldes 21 liegt. Im vorliegenden Fall beträgt dieser Winkel W beispielhaft ca. 120° (nach rechts Lenken in Figur 2) bzw. 30° (nach links Lenken in Figur 2).

Derartige Grenzen für den Winkel können vorab festgelegt sein und/oder bedarfsweise ermittelt werden. Es kann allerdings auch keine entsprechende Vorabfestlegung vorliegen, sondern kann anhand von Koordinatenvergleichen überprüft werden, ob der Umgebungsbereich MK im Sichtfeld 21 liegt oder nicht. Tritt dieser außerhalb des Sichtfelds 21, kann ein entsprechend kritischer Winkel W erreicht worden sein und kann ohne gesonderte Winkelüberprüfung ein Einblenden am Randbereich erfolgen.

Gemäß bisherigen Ansätzen würde ein Objekt, wenn sich der dazugehörige Umgebungsbereich MK nicht mehr im Sichtfeld 21 befindet, nicht länger eingeblendet werden. Vorliegend ist stattdessen vorgesehen, die Navigationshinweise 22 dann nach wie vor einzublenden. Dies erfolgt an demjenigen seitlichen Randbereich, der am nächsten zu dem Umgebungsbereich MK positioniert ist und/oder über den der Umgebungsbereich MK visuell seitlich aus dem Sichtfeld 21 ausgetreten ist.

Die dortige Einblendung wird aufrechterhalten, bis der Winkel Weine zulässige Grenze überschritten hat. Vorliegend betrifft dies Werte von mehr als 180° oder auch negative Werte. Diese deuten jeweils daraufhin, dass das Fahrzeug den Navigationshinweis 22 endgültig befolgt oder auch nicht befolgt hat, dieser also nicht mehr aktuell ist.

Lenkt der Fahrer ausgehend von Figur 4C nach links und tritt der Umgebungsbereich MK dann wieder in das Sichtfeld 21 ein, wird der Navigationshinweis 22 wieder in horizontaler Richtung zu der Mitte bewegt werden. Er wird dann beispielsweise sukzessive zur Position aus Figur 4B und gegebenenfalls auch darüber hinaus horizontal verschoben werden.

### Bezugszeichenliste

- 10: Fahrzeug
- 12: Fahrbahn
- 14: Kreuzung
- 16: globales (Umfeld-)Koordinatensystem
- 18: Fahrzeug-Koordinatensystem
- 19: Beschleunigungssensor
- 20: Head-Up-Displayeinrichtung (HUD)
- 21: Sichtfeld
- 22: einzublendendes virtuelles Objekt (Navigationshinweis)
- 30: virtuelles Bezugsmerkmal (virtuelle Wand)
- 32: kreuzende Fahrbahn
- W: Winkel (der Relativausrichtung)
- F: Fahrtrichtungsvektor
- MK: Umgebungsbereich (Kreuzungsmittelpunkt)
- B: Bewegungsrichtung des Fahrzeugs

## Patentansprüche

1. Verfahren zum Betreiben einer Head-Up-Displayeinrichtung (20) für ein Kraftfahrzeug (10), wobei Umgebungsbereichen (MK) des Kraftfahrzeugs (10) virtuelle Objekte (22) zuordenbar sind und das Verfahren aufweist:
- Erhalten eines virtuellen Bezugsmerkmals (30), dessen Ausrichtung abhängig von einer von dem Kraftfahrzeug (10) genutzten oder nutzbaren Fahrbahn (12) definiert ist;
- Ermitteln einer Ausrichtung des Kraftfahrzeugs (10) relativ zu dem virtuellen Bezugsmerkmal (30);
- Einblenden eines virtuellen Objekts (22), wenn der zugeordnete Umgebungsbereich (MK) in einem Sichtfeld (21) der Head-Up-Displayeinrichtung (20) liegt, wobei eine horizontale Position des eingeblendeten Objekts (22) im Sichtfeld (21) abhängig von der Relativausrichtung zu dem virtuellen Bezugsmerkmal (30) ist,
**dadurch gekennzeichnet, dass**
dann, wenn sich der Umgebungsbereich (MK) wieder außerhalb des Sichtfelds (21) befindet, das Objekt (22) zumindest vorübergehend an einem Randbereich des Sichtfeldes (21) eingeblendet wird.

2. Verfahren nach Anspruch 1,
**dadurch gekennzeichnet, dass** das Bezugsmerkmal (30) wenigstens eine virtuelle Linie oder wenigstens eine virtuelle Fläche umfasst.

3. Verfahren nach Anspruch 1 oder 2,
**dadurch gekennzeichnet, dass** die Ausrichtung des Bezugsmerkmals (30) basierend auf Kartendaten definiert ist, welche eine Lage der Fahrbahn (12) beschreiben, und/oder dass das Bezugsmerkmal (30) in einem Winkel zu der Fahrbahn verläuft.

4. Verfahren nach einem der vorangehenden Ansprüche,
**dadurch gekennzeichnet, dass** das Bezugsmerkmal (30) verschieden von dem Umgebungsbereich (MK) ist, dem das Objekt (22) zugeordnet ist.

5. Verfahren nach einem der vorangehenden Ansprüche,
**dadurch gekennzeichnet, dass** die horizontale Position gegenläufig zu einer Änderung der Relativausrichtung variierbar ist

6. Verfahren nach einem der vorangehenden Ansprüche,
**dadurch gekennzeichnet, dass** als eine die Relativausrichtung beschreibende Größe ein Winkel (W) zwischen dem Kraftfahrzeug (10) und dem Bezugsmerkmal (30) ermittelt wird

7. Head-Up-Displayeinrichtung (20) für ein Kraftfahrzeug (10),
die dazu eingerichtet ist:
- ein virtuelles Bezugsmerkmal (30) zu erhalten, dessen Ausrichtung abhängig von einer von dem Kraftfahrzeug (10) genutzten oder nutzbaren Fahrbahn (12) definiert ist;
- eine Ausrichtung des Kraftfahrzeugs (10) relativ zu dem virtuellen Bezugsmerkmal (30) zu ermitteln;
- ein virtuelles Objekts (22) einzublenden, wenn der zugeordnete Umgebungsbereich (MK) in einem Sichtfeld (21) der Head-Up-Displayeinrichtung (20) liegt,
wobei die Head-Up-Displayeinrichtung (20) ferner dazu eingerichtet ist, eine horizontale Position des eingeblendeten Objekts (22) im Sichtfeld (21) abhängig von der Relativausrichtung zu dem virtuellen Bezugsmerkmal (30) festzulegen
**dadurch gekennzeichnet, dass**
die Head-up-Displayeinrichtung (20) derart ausgebildet ist, dass dann, wenn sich der Umgebungsbereich (MK) wieder außerhalb des Sichtfeldes (21) befindet, das Objekt (22) zumindest vorübergehend an einem Randbereich des Sichtfelds (21) eingeblendet wird.

## Claims

1. Method for operating a head-up display device (20) for a motor vehicle (10), wherein virtual objects (22) are assignable to vicinity regions (MK) of the motor vehicle (10) and the method includes:
- obtaining a virtual reference feature (30) whose orientation is defined depending on a road surface (12) which is used or usable by the motor vehicle (10);
- ascertaining an orientation of the motor vehicle (10) relative to the virtual reference feature (30);
- superposing a virtual object (22) when the assigned vicinity region (MK) lies in a field of view (21) of the head-up display device (20), wherein a horizontal position of the superposed object (22) in the field of view (21) is dependent on the relative orientation to the virtual reference feature (30),
**characterized in that**
the object (22) is superposed at least temporarily at a peripheral region of the field of view (21) when the vicinity region (MK) is outside the field of view (21) again.

2. Method according to Claim 1,
**characterized in that** the reference feature (30) comprises at least one virtual line or at least one virtual area.

3. Method according to Claim 1 or 2,
**characterized in that** the orientation of the reference feature (30) is defined on the basis of map data that describe a location of the road surface (12), and/or **in that** the reference feature (30) extends at an angle to the road surface.

4. Method according to any of the preceding claims,
**characterized in that** the reference feature (30) is different from the vicinity region (MK) to which the object (22) is assigned.

5. Method according to any of the preceding claims, **characterized in that** the horizontal position is variable to run counter to a change in the relative orientation.

6. Method according to any of the preceding claims, **characterized in that** an angle (W) between the motor vehicle (10) and the reference feature (30) is ascertained as a variable describing the relative orientation.

7. Head-up display device (20) for a motor vehicle (10),
which is configured to:
- obtain a virtual reference feature (30) whose orientation is defined depending on a road surface (12) which is used or usable by the motor vehicle (10);
- ascertain an orientation of the motor vehicle (10) relative to the virtual reference feature (30);
- superpose a virtual object (22) when the assigned vicinity region (MK) lies in a field of view (21) of the head-up display device (20),
wherein the head-up display device (20) is furthermore configured to define a horizontal position of the superposed object (22) in the field of view (21) depending on the relative orientation to the virtual reference feature (30),
**characterized in that**
the head-up display device (20) is configured such that the object (22) is superposed at least temporarily at a peripheral region of the field of view (21) when the vicinity region (MK) is outside the field of view (21) again.

## Revendications

1. Procédé permettant de faire fonctionner un dispositif d'affichage tête haute (20) pour un véhicule automobile (10), dans lequel des objets virtuels (22) peuvent être attribués à des zones d'environnement (MK) du véhicule automobile (10), et le procédé présente les étapes consistant à :
- obtenir une particularité de référence virtuelle (30) dont l'orientation est définie en fonction d'une voie de circulation (12) utilisée ou utilisable par le véhicule automobile (10) ;
- déterminer une orientation du véhicule automobile (10) par rapport à la particularité de référence virtuelle (30) ;
- incruster un objet virtuel (22) si la zone d'environnement (MK) attribuée se situe dans un champ de vision (21) du dispositif d'affichage tête haute (20), dans lequel une position horizontale de l'objet incrusté (22) dans le champ de vision (21) dépend de l'orientation relative par rapport à la particularité de référence virtuelle (30),
**caractérisé en ce que**, lorsque la zone d'environnement (MK) se trouve à nouveau à l'extérieur du champ de vision (21), l'objet (22) est incrusté au moins provisoirement au niveau d'une zone marginale du champ de vision (21).

2. Procédé selon la revendication 1, **caractérisé en ce que** la particularité de référence (30) comprend au moins une ligne virtuelle et au moins une surface virtuelle.

3. Procédé selon la revendication 1 ou 2, **caractérisé en ce que** l'orientation de la particularité de référence (30) est définie sur la base de données cartographiques qui décrivent une situation de la voie de circulation (12), et/ou **en ce que** la particularité de référence (30) s'étend selon un angle par rapport à la voie de circulation.

4. Procédé selon l'une quelconque des revendications précédentes, **caractérisé en ce que** la particularité de référence (30) est différente de la zone d'environnement (MK) à laquelle est attribué l'objet (22) .

5. Procédé selon l'une quelconque des revendications précédentes, **caractérisé en ce que** la position horizontale peut varier en sens opposé à une modification de l'orientation relative.

6. Procédé selon l'une quelconque des revendications précédentes, **caractérisé en ce qu'**un angle (W) entre le véhicule automobile (10) et la particularité de référence (30) est déterminé comme une grandeur décrivant l'orientation relative.

7. Dispositif d'affichage tête haute (20) destiné à un véhicule automobile (10), qui est conçu pour :
- obtenir une particularité de référence virtuelle (30) dont l'orientation est définie en fonction d'une voie de circulation (12) utilisée ou utilisable par le véhicule automobile (10) ;
- déterminer une orientation du véhicule automobile (10) par rapport à la particularité de référence virtuelle (30) ;
- incruster un objet virtuel (22) si la zone d'environnement (MK) attribuée est située dans un champ de vision (21) du dispositif d'affichage tête haute (20),
dans lequel le dispositif d'affichage tête haute (20) est en outre conçu pour fixer une position horizontale de l'objet incrusté (22) dans le champ de vision (21) en fonction de l'orientation relative par rapport à la particularité de référence virtuelle (30)
**caractérisé en ce que** le dispositif d'affichage tête haute (20) est réalisé de telle sorte que lorsque la zone d'environnement (MK) se trouve à nouveau à l'extérieur du champ de vision (21), l'objet (22) est incrusté au moins provisoirement au niveau d'une zone marginale du champ de vision (21).
